Europäisches Patentamt

European Patent Office

Office européen des brevets

(11) Veröffentlichungsnummer: **0 037 539**

A2

(12) # EUROPÄISCHE PATENTANMELDUNG

(21) Anmeldenummer: 81102357.1

(22) Anmeldetag: 28.03.81

(51) Int. Cl.³: **F 25 B 15/00**
**F 24 J 3/04**

(30) Priorität: 02.04.80 DE 3012932

(43) Veröffentlichungstag der Anmeldung:
14.10.81 Patentblatt 81/41

(84) Benannte Vertragsstaaten:
AT CH FR GB LI NL SE

(71) Anmelder: M.A.N. MASCHINENFABRIK
AUGSBURG-NÜRNBERG Aktiengesellschaft
Dachauer Strasse 667 Postfach 50 06 20
D-8000 München 50(DE)

(72) Erfinder: Widmaier, Heinz
Unterer Anger 14
D-8000 München 2(DE)

(54) Sorptions-Wärmepumpe oder -Kältemaschine.

(57) Sorptions-Wärmepumpe oder -Kältemaschine bestehend aus mindestens einem Absorger, einem Austreiber,
einem Verdampfer bzw. Entgaser und einem Kondensator
bzw. Resorber, wobei diese Aggregate in mindestens zwei
kompakten Anordnungen zusammengefaßt sind, und zwar
derart, daß die Aggregate entsprechend den Temperaturbereichen der in ihnen erfolgenden Wärmeumsetzung in drei
Baugruppen zusammengefaßt sind.

EP 0 037 539 A2

gü/sd

M.A.N.  MASCHINENFABRIK AUGSBURG-NÜRNBERG
Aktiengesellschaft

München, 20. März 1980

Sorptions-Wärmepumpe oder -Kältemaschine

Die Erfindung bezieht sich auf eine Sorptions-Wärmepumpe oder -Kältemaschine, bestehend aus mindestens
einem Absorber, einem Austreiber, einem Verdampfer
und einem Kondensator bzw. einem Entgaser und einem Resorber, wobei diese Aggregate in mindestens zwei kompakten
Anordnungen zusammengefaßt sind.

Die nach dem gleichen Kreisprozeß arbeitenden Kältemaschinen und Wärmepumpen finden sowohl in der Industrie
als auch für den Privatgebrauch vielseitige Einsatzmöglichkeiten. Man ist daher bestrebt, solche Maschinen so herzustellen, daß sie für den Einsatz verschiedener Anwendungsarten gleichzeitig geeignet sind, um eine wirtschaftliche
Serienanfertigung derselben zu ermöglichen.

Es ist in diesem Sinne auf dem Gebiet der Warmwasseraufbereitung vorgeschlagen worden, eine Sorptions-
Wärmepumpe mit angeschlossenem Brauchwasserspeicher
in kompakter Bauweise herzustellen, wobei die Aggregate
in zwei kompakte Anordnungen zusammengefaßt sind, und zwar
derart, daß sämtliche das Arbeitsmittel führende Komponenten
eine erste Anordnung und die nicht das Arbeitsmittel

7.1983
20.03.1980

führenden Komponenten eine zweite Anordnung bilden.
Mit dieser Ausbildung ist gleichzeitig eine verlustarme
Zuführung der Primärenergie an das Brauchwasser-Heizsystem
gewährleistet.

In vielen Fällen sind jedoch Anergiequellen, Heizquellen
und Wärmeabnehmer örtlich mehr oder weniger weit entfernt.
Für solche Fälle ist die vorgeschlagene kompakte Ausführung
weniger geeignet.

Weiterhin sind üblicherweise für jede Art der Heizenergie
oder der Anergiequelle anders geartete Apparate erforderlich, so daß für jeden Anwendungsfall ein neues Sorptionssystem konzipiert werden muß.

Der Erfindung liegt die Aufgabe zugrunde, eine Sorptions-
Wärmepumpe bzw. -Kältemaschine der eingangs genannten Art
so auszubilden, daß sie unabhängig von örtlichen oder
heizungstechnischen Anforderungen allgemein für den jeweiligen Bedarf einsetzbar ist.

Die Aufgabe ist dadurch gelöst, daß die Aggregate entsprechend den Temperaturbereichen der in ihnen erfolgenden
Wärmeumsetzung in drei Baugruppen zusammengefaßt sind.

Die Wärmeumsetzungen auf den verschiedenen Temperaturbereichen erfolgen einerseits im Austreiber, der die
Heizenergie höchsten Temperaturniveaus erhält, zweitens
im Verdampfer bzw. Entgaser, dem die Anergie beim
niedrigsten Temperaturniveau aus der Umgebung bzw. der
zu kühlenden Stelle zufließt, und schließlich in den
übrigen Aggregaten, sowie gegebenenfalls einem Rektifikator bzw. einen Dephlegmator, bei denen Wärmeenergie
mittleren Temperaturniveaus abgegeben wird.

7.1983
20.03.1980

Es lassen sich somit drei Baugruppen herstellen, die aus einer Austreiber-Baugruppe, einer Verdampfer-Baugruppe sowie aus einer den Absorber, Kondensator und gegebenenfalls einem Resorber, einem Dephlegmator und einen Rektifikator enthaltenden Baugruppe bestehen.

Derartige Baugruppen lassen sich vorteilhaft als einzeln austauschbare Bauaggregate herstellen, die gegenüber den herkömmlichen Bauweisen den Vorteil haben, daß sie nach dem Baukastenprinzip für jeden Anwendungsfall zusammenstellbar sind. Die Austreiber-Baugruppe kann somit dort aufgestellt werden, wo Heizenergie verfügbar ist. Außerdem läßt sich ohne weiteres eine Auswahl des Austreiber-Typs nach Art des Heizmediums (Gas, flüssige Brennstoffe, feste Brennstoffe, Heizdampfer u.a.) treffen, ohne dabei ein komplett neues System der gesamten Wärmepumpe bzw, Kältemaschine konzipieren zu müssen. Auch die Verdampfer-Baugruppe kann unabhängig von der Anordnung des Austreibers dort eingerichtet werden, wo die Anergie entnommen werden kann oder im Falle der Kältemaschine, wo Kälte benötigt wird. Auch in diesen Fällen ist es möglich, die Aggregate individuell, nach Art der Anergiequelle (Luft, Wasser, Erde, Abwärme u.a.) zu wählen bzw. auszuwählen. Die beschriebene Aufteilung in Baugruppen ermöglicht somit die Einrichtung einer vorteilhaften Serienfertigung trotz einer Vielzahl unterschiedlichster Anwendungsfälle.

Die erfindungsgemäße Aufteilung hat den weiteren Vorteil, daß die Aggregate der Baugruppe mit der Wärmeumsetzung mittleren Temperaturniveaus hintereinander angeordnet sich zu einem kompakten Bauelement zusammenfaßen lassen, wodurch eine weitere Reduzierung der Herstellungskosten erzielt wird. Um die Stellfläche möglichst gering zu halten, können die Aggregate dabei übereinander angeordnet werden.

7.1983
20.03.1980

In der Zeichnung ist ein Ausführungsbeispiel gemäß der Erfindung schematisch dargestellt. Es zeigen:

Fig. 1    das Prinzip einer Sorptionsanlage und

Fig. 2    das Ausführungsbeispiel.

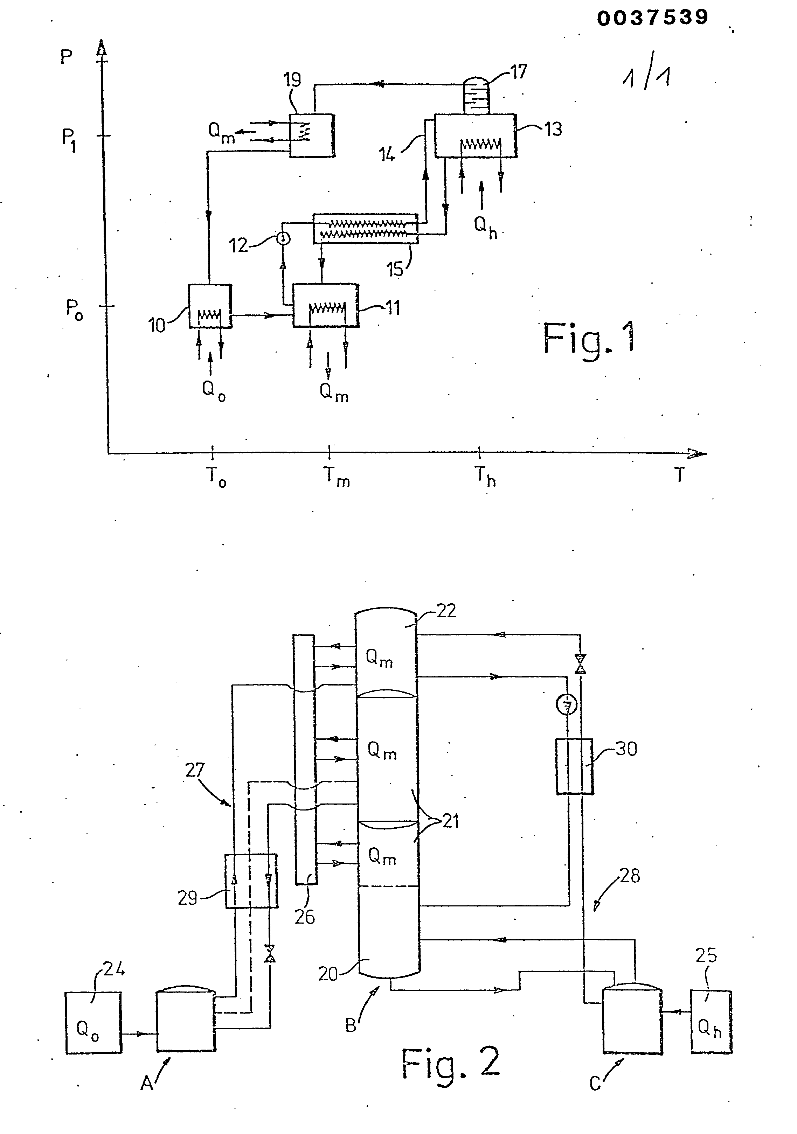

In Fig. 1 ist eine Sorptionsanlage zur Kälte- oder Wärmeerzeugung dargestellt, wobei die verschiedenen Aggregate in einem Druck- Temperaturdiagramm entsprechend ihrem jeweiligen Arbeitsdruck P und Arbeitstemperatur T eingezeichnet sind. In einem Verdampfer bzw. Entgaser 10 wird ein Arbeitsmedium durch Aufnahme der sogenannten Anergiewärme $Q_0$ aus einer Umgebung mit der niedrigeren Temperatur $T_0$ verdampft und in einen Absorber 11 von einem Lösungsmittel aufgenommen. Dieser Prozeß erfolgt bei einer mittleren Temperatur $T_m$. Die dabei entwickelte Wärmemenge $Q_m$ wird im Falle einer Kältemaschine abgeführt bzw. im Wärmepumpenbetrieb einem Verbraucher zugeführt. Eine Pumpe 12 fördert die Lösung in einem geschlossenen Kreislauf über einen Austreiber oder Generator 13 aus dem Absorber und wieder zurück in denselben. In dem Kreislauf 14 findet in einem Temperaturwechsler 15 eine Wärmeübertragung zwischen der aus dem Austreiber 13 und aus dem Absorber fließenden Lösung statt. Der Austreiber 13 arbeitet unter Aufnahme einer Wärme $Q_h$ aus einer nicht dargestellten Heizquelle auf dem hohen Temperaturniveau $T_h$.

Das im Austreiber im allgemeinen mit einem Anteil des Lösungsmittels verdampfende Arbeits- bzw. Kältemittel wird anschließend in einem Rektifikator 17 gereinigt und durch einen Kondensator oder Resorber 19 durchgeführt, in dem die Wärme $Q_m$ abgeführt oder einem Verbrau-

7.1983
20.03.1980

cher zugeführt wird. Das verflüssigte Arbeitsmittel gelangt schließlich erneut in den Entgaser bzw. Verdampfer 10, wo es wieder verdampft wird.

Das in Fig. 1 gezeigte Schema ist das Grundprinzip einer einstufigen Absorptionsanlage, die sowohl als Kältemaschine oder als Wärmepumpe betrieben werden kann. Bei höheren Leistungsansprüchen werden mehrstufige Anlagen verwendet, bei denen zwischen dem Austreiber 13 und dem Verdampfer 10 mehrere Resorptions- bzw. Kondensationsstufen eingeschaltet werden. Es ist dabei auch möglich, mehrere Verdampfer 10 zu verwenden.

Fig. 2 zeigt eine Aufteilung eines Sorptionssystems in drei Baugruppen A, B, C, am Beispiel einer Absorptionswärmepumpe. Die erste Baugruppe A enthält einen oder mehrere Verdampfer. Die Wärmeumsetzung in diesem Aggregat erfolgt bei der niedrigsten Temperatur $T_o$, die die Temperatur des Mediums ist, aus der die Wärme $Q_o$ entzogen wird. In der Baugruppe B sind mehrere Aggregate übereinander zusammengefaßt. Am unteren Ende 20 befindet sich ein Rektifikator mit gegebenenfalls einem Dephlegmator. Im mittleren Teil 21 der Baueinheit B sind ein oder mehrere Kondensatoren angeordnet; und schließlich befindet sich im oberen Ende 22 der Absorber.

Diese drei Baugruppen können unabhängig voneinander ausgewechselt, gewählt und örtlich angeordnet werden. Die Baugrppe A kann nahe der Quelle 24 installiert werden, von der sie die Anergiewärme $Q_o$ entnimmt. Eine Quelle 25 für die Heizwärme $Q_h$ wird den Standort der Baugruppe 10 bestimmen und die Baugruppe B kann schließlich unabhängig vom Standort der ersten beiden Baugruppen A und B an einem zweckmäßigen Platz aufgestellt werden, der eine

7.1983
20.03.1980

möglichst verlustarme und fertigungstechnisch rationelle Verbindung mit einem oder mehreren Verbrauchern 26 gestattet.

Die Verschaltung dieser Aggregate zu einer Sorptionsanlage erfolgt durch zwei Rohrbündel. Das eine Rohrbündel 27 verbindet den oder die Verdampfer der A-Gruppe mit den Absorber bzw. Kondensatoren oder Resorbern der Gruppe B. Die gestrichelte Linie des Rohrbündels 27 deutet einen Mehrfachanschluß für zwei oder mehrstufige Anlagen an.

Das zweite Rohrbündel 28 dient zur Führung des Arbeitsmittels bzw. der Lösung zwischen dem Austreiber der Gruppe C und dem Rektifikator bzw. dem Absorber der Gruppe B. Notwendige Temperaturwechsler 29, 30 können bei einer derartigen Anordnung bequem in das jeweilige Rohrbündel 27 bzw. 28 zwischengeschaltet werden. Die Rohrbündel 27 und 28 lassen sich ferner zum Zwecke der Wärmeisolierung innerhalb Sammelrohren anordnen. Die abgeführte Wärme $Q_m$ wird über ein Sammelsystem 26 zusammengeführt und als Nutz- bzw. Abwärme abgeführt, wobei Wasser als Wärmeträger verwendet werden kann.

7.1983
20.03.1980

gü/sd

M.A.N.   MASCHINENFABRIK AUGSBURG-NORNBERG
Aktiengesellschaft

München, 20. März 1980

P a t e n t a n s p r ü c h e

1.   Sorptions-Wärmepumpe oder-Kältemaschine bestehend
     aus mindestens einem Absorber, einem Austreiber,
     einem Verdampfer bzw. Entgaser und einem Kondensator
     bzw. Resorber, wobei diese  Aggregate in mindestens
     zwei kompakten Anordnungen zusammengefaßt sind, dadurch gekennzeichnet, daß die Aggregate (11, 13, 10,
     19) entsprechend den Temperaturbereichen der in ihnen
     erfolgenden Wärmeumsetzung in drei Baugruppen (A, B, C)
     zusammengefaßt sind.

2.   Sorptionsanlage nach Anspruch 1, dadurch gekennzeichnet, daß eine erste Baugruppe (A) einen oder
     mehrere Verdampfer (10) enthält, daß die zweite
     Baugruppe (B) den Absorber (11), einen oder mehrere
     Kondensatoren (19) und gegebenenfalls einen Rektifikator (17) und Dephlegmator zusammenfaßt, und
     daß die dritte Baugruppe (C) den Austreiber (13)
     enthält.

7.1983

3. Sorptionsanlage nach Anspruch 1 oder 2, dadurch gekennzeichnet, daß die zweite Baugruppe (B) über ein erstes Rohrbündel (27) an die erste Baugruppe (A) und über ein zweites Rohrbündel (28) an die dritte Baugruppe (C) angeschlossen ist.

4. Sorptionsanlage nach einem der vorhergehenden Ansprüche, dadurch gekennzeichnet, daß die Aggregate (11, 17, 19) der zweiten Baugruppe (B) hintereinander angeordnet sind.

5. Sorptionsanlage nach einem der vorhergehenden Ansprüche, dadurch gekennzeichnet, daß die Aggregate (11, 17, 19) der zweiten Baugruppe (B) übereinander angeordnet sind.

6. Sorptionsanlage nach einem der vorhergehenden Ansprüche, dadurch gekennzeichnet, daß die Anlage sowohl nach dem Absorptions- als auch Resorptionsprinzip arbeitet.

7.1983
20.03.1980·

Fig. 1

Fig. 2

0037539

1/1